Europäisches Patentamt

(19) European Patent Office

Office européen des brevets

(11) EP 0 800 145 B1

(12) **EUROPÄISCHE PATENTSCHRIFT**

(45) Veröffentlichungstag und Bekanntmachung des Hinweises auf die Patenterteilung:
**01.12.1999 Patentblatt 1999/48**

(51) Int Cl.⁶: **G06K 9/00**, G06F 3/033

(21) Anmeldenummer: **97104414.4**

(22) Anmeldetag: **14.03.1997**

(54) **Verfahren zur Erkennung mindestens eines fingerförmigen Objekts in einem handförmigen ernsten Opjekt durch einen Rechner**

Method for recognition by computer of at least one finger-shaped object in a hand-shaped first object

Procédé de reconnaissance par ordinateur d'au moins un objet en forme de doigt dans un premier objet en forme de main

(84) Benannte Vertragsstaaten:
**DE FR GB IT SE**

(30) Priorität: **01.04.1996 DE 19612949**

(43) Veröffentlichungstag der Anmeldung:
**08.10.1997 Patentblatt 1997/41**

(73) Patentinhaber: **SIEMENS AKTIENGESELLSCHAFT 80333 München (DE)**

(72) Erfinder:
• **Maggioni, Christoph 81541 München (DE)**
• **Kämmerer, Bernhard 85521 Ottobrunn (DE)**

(56) Entgegenhaltungen:
• **KOICHI ISHIBUCHI ET AL: "REAL TIME HAND SHAPE RECOGNITION FOR MAN-MACHINE INTERFACES" EMERGENT INNOVATIONS ON INFORMATION TRANSFER PROCESSING AND DECISIO MAKING, CHICAGO, OCT. 18 - 21, 1992, Bd. VOL. 2, Nr. -, 18. Oktober 1992, INSTITUTE OF ELECTRICAL AND ELECTRONICS ENGINEERS, Seiten 1407-1412, XP000366975**

## Beschreibung

Die Erfindung betrifft die rechnergestützte Erkennung eines fingerförmigen Objekts, welches eine vorgebbare Farbe aufweist, durch einen Rechner. Die Erkennung muß verläßlich und schnell durchführbar sein.

Es sind Verfahren zur Erkennung eines fingerförmigen Objekts bekannt [1], [8].

Diese Verfahren weisen einige erhebliche Nachteile auf. Bei den bekannten Verfahren wird die Farbe des zu klassifizierenden fingerförmigen Objekts nicht berücksichtigt, was zu fehlerbehafteten Klassifikationen des fingerförmigen Objekts führt.

Ferner ist ein Nachteil der bekannten Verfahren in der Komplexität des Verfahrens zu sehen, was zu einer nur sehr rechenintensiven Durchführung der Erkennung führt, wofür bei Echtzeitanforderungen lediglich sehr leistungsfähige Rechner, vor allem Workstations, geeignet sind.

Daraus resultiert ein weiterer Nachteil, der in den Kosten für die Anordnung zur Durchführung der bekannten Verfahren (Workstation) zu sehen ist.

Weiterhin ist es aus [2] bekannt, das aus [1] bekannte Verfahren zur Steuerung eines virtuellen Touch Screens einzusetzen. Die bekannte Verwendung unterliegt jedoch allen Nachteilen des bekannten Verfahrens und ist somit nur in eingeschränktem Maße verläßlich anwendbar und auch nur mit erheblichem Kostenaufwand.

Weiterhin sind verschiedene Verfahren zum Aufbau einer digitalen Farbtabelle mit Hilfe eines Rechners bekannt, beispielsweise aus den Dokumenten [3] und [4].

Ferner ist ein Verfahren zur Konturverfolgung aus dem Dokument [5] bekannt.

Ein Verfahren zur Kalibrierung einer Kamera ist aus [6] bekannt.

Der Erfindung liegt das Problem zugrunde, ein fingerförmiges Objekt mit Hilfe eines Rechners schnell, einfach und verläßlich zu klassifizieren.

Das Problem wird durch das Verfahren gemäß Patentanspruch 1 gelöst.

Es wird mindestens ein digitales Bild mit einer Kamera aufgenommen und in einem Rechner gespeichert. Ein erstes, handförmiges Objekt wird unter Verwendung einer digitalen Farbtabelle und einem Konturverfolgungsverfahren bestimmt. In dem ersten, handförmigen Objekt wird ein zweites, handflächenförmiges Objekt bestimmt. In dem zweiten, handflächenförmigen Objekt wird ein Referenzpunkt gewählt. Mindestens ein Fingerspitzenpunkt wird bestimmt durch Untersuchung von Punkten, die sich auf der Kontur befinden. Ist eine Strecke von dem jeweiligen Punkt zu dem Referenzpunkt länger als eine vorgebbare Schranke, so wird der Punkt als Fingerspitzenpunkt klassifiziert. Für jeden Fingerspitzenpunkt wird folgendes iteratives Verfahren durchgeführt. Es werden zwei Punkte auf der Kontur gewählt, auf denen jeweils in etwa ein Lot bezüglich der Kontur errichtet wird. Auf jedes dieser Lote wird von dem Fingerspitzenpunkt jeweils ein weiteres Lot gefällt. Für beide Punkte wird nun ein Längenverhältnis der Strecken des Lots, ausgehend von dem Fingerspitzenpunkt zu dem Schnittpunkt mit dem Lot durch den jeweiligen Punkt zu der Strecke des jeweiligen Lots durch den jeweiligen Punkt von dem Punkt mindestens zu dem Schnittpunkt mit dem Lot durch den Fingerspitzenpunkt. Die beiden Längenverhältnisse werden miteinander verglichen, und für den Fall, daß sich das Längenverhältnis vergrößert, wenn man sich von dem Fingerspitzenpunkt entfernt, wird eine neue Iteration mit Punkten durchgeführt, die mindestens so weit von dem Fingerspitzenpunkt entfernt ist, wie der am weitesten entfernte Punkt der vorigen Iteration. Ist dies nicht mehr der Fall, wird der Bereich, der von dem am weitesten entfernten Punkt der letzten Iteration, dem Fingerspitzenpunkt, der Kontur und einem Symmetriepunkt, der sich auf der Kontur befindet und zu dem Punkt der letzten Iteration bezüglich des Lots durch den Fingerspitzenpunkt in etwa achsensymmetrisch ist.

Das Verfahren zeichnet sich vor allem durch seine Einfachheit aus, was dazu führt, daß das Verfahren sogar mit einem Standard-Personal Computer in Echtzeit durchführbar ist. Damit wird auch eine erhebliche Kosteneinsparung erzielt für die zur Durchführung des Verfahrens benötigte Anwendung. Weiterhin weist das Verfahren eine sehr hohe Robustheit und geringe Fehleranfälligkeit auf. Auch ist ein Vorteil des erfindungsgemäßen Verfahrens in der Berücksichtigung der vorgebbaren Farbe des ersten Objekts zu sehen, wodurch die Ermittlung des ersten Objekts auch in ungünstigen Umgebungen, beispielsweise einer Umgebung des ersten Objekts, in der ähnliche Farben wie die des ersten Objekts vorkommen. Auch in einer solchen Umgebung ist das Verfahren zuverlässig.

Vorteilhafte Weiterbildungen der Erfindung ergeben sich aus den abhängigen Ansprüchen.

Der Rechenzeitbedarf bei der Durchführung des Verfahrens mit Hife eines Rechners wird verringert, wenn der Fingerspitzenpunkt sich ergibt aus dem Punkt auf der Kontur, dessen Verbindung zwischen dem Punkt und dem Referenzpunkt RP maximal ist.

Weiterhin ist es vorteilhaft, für die Vergleichspunkte auf der Kontur Symmetriepunkte zu ermitteln und diese bei der Ermittlung der Längenverhältnisse zu berücksichtigen, indem die Strecke des Lots durch die Vergleichspunkte bis zu den Symmetriepunkten verlängert wird. Dadurch wird die Verläßlichkeit einer korrekten Klassifikation des fingerförmigen Objekts weiter erheblich verbessert.

Ferner ist es vorteilhaft, eine zweite Schranke vorzusehen und den ermittelten Bereich nur dann als das fingerförmige Objekt zu klassifizieren, wenn das Längenverhältnis der in der letzten Iteration ermittelten Punktes größer ist als die zweiten Schranke.

Weiterhin ist es in einer Weiterbildung des erfindungsgemäßen Verfahrens vorteilhaft, die Erkennung des fingerförmigen Objekts zu verwenden bei der Realisierung eines virtuellen Touch Screens. Unter Verwendung des erfindungsgemäßen Verfahrens wird ein verläßlicherer, mit einem Standard-PC realisierbarer Touch Screen realisiert als der aus dem Dokument [2] bekannte Touch Screen.

Durch weiteren Einsatz von Spracherkennungsverfahren ist die zusätzliche Steuerung des virtuellen Touch Screens mit Hilfe eingesprochener Sprache möglich. Dies eröffnet ein weiteres Anwendungsspektrum als die lediglich manuelle Steuerung des virtuellen Touch Screens.

Ein Ausführungsbeispiel ist in den Figuren dargestellt und wird im weiteren anhand der Figuren näher erläutert.

Es zeigen

Figur 1    die einzelnen Verfahrensschritte des erfindungsgemäßen Verfahrens in Form eines Ablaufdiagramms;

Figur 2    eine Skizze eines mit dem Verfahren untersuchten handförmigen Objekts;

Figur 3    eine Anordnung eines virtuellen Touch Screens, bei dem das erfindungsgemäße Verfahren eingesetzt wird.

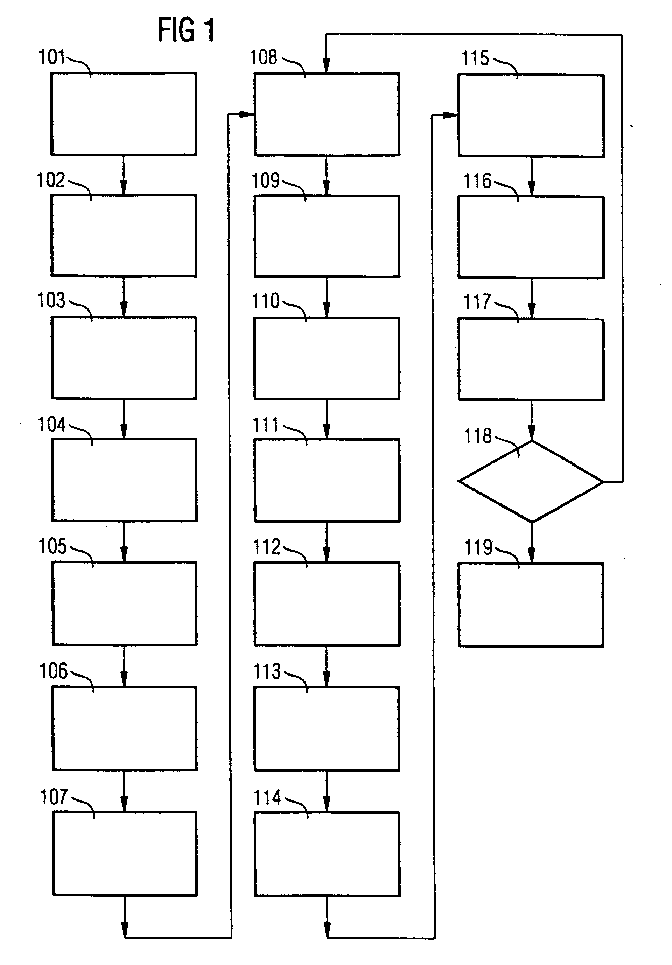

Es wird in einem ersten Schritt 101 mindestens ein Bild, welches ein erstes, handförmiges Objekt HO aufweist, von einer Kamera K aufgenommen (vgl. Figur 1). Es muß sich hierbei nicht um ein einziges Bild handeln, sondern es ist ebenso vorgesehen, daß eine Folge von Bildern von der Kamera K aufgenommen wird.

Das mindestens eine Bild wird in einem Rechner R, mit dem das Verfahren notwendigerweise durchgeführt wird, digitalisiert B.

In dem digitalisierten Bild B wird in einem weiteren Schritt 102 das erste, handförmige Objekt HO ermittelt. Dies geschieht unter Verwendung einer zuvor in einer für den Fachmann bekannter Weise aufgebauten Farbtabelle. Ferner wird zur Ermittlung des ersten, handförmigen Objekts HO beispielsweise ein aus dem Dokument [5] bekanntes Konturverfolgungsverfahren verwendet.

Ergebnis dieser Ermittlung ist das erste, handförmige Objekt HO, welches durch eine Kontur KO begrenzt wird. In dem ersten, handförmigen Objekt HO wird in einem weiteren Schritt 103 ein zweites, handflächenförmiges Objekt HFO bestimmt.

Dies geschieht beispielsweise dadurch, daß der Schwerpunkt des handförmigen Objekts HO oder des handflächenförmigen Objekts HFO ermittelt wird.

Eine Alternative zur oben beschriebenen Vorgehensweise ist in der Verwendung des sogenannten Region Shrinking Algorithmus zu sehen.

Ist das zweite, handflächenförmige Objekt bestimmt, wird innerhalb des zweiten Objekts ein Referenzpunkt RP gewählt 104.

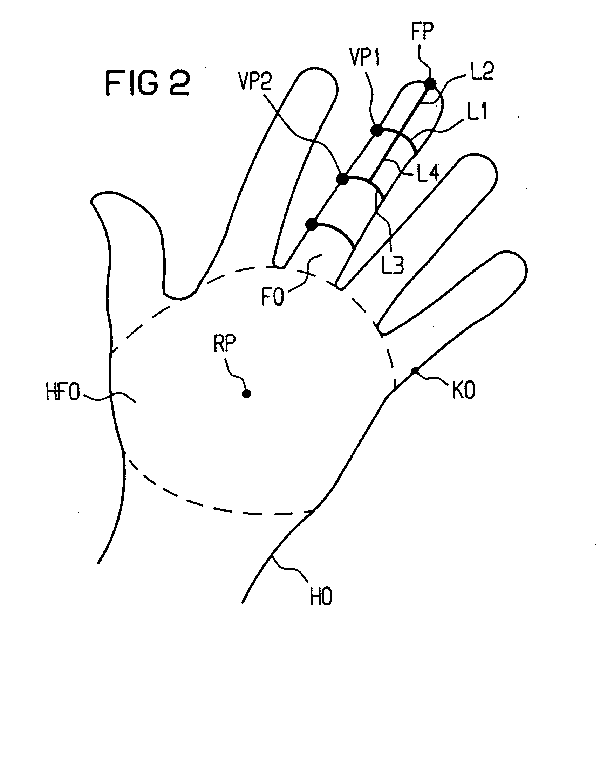

Ausgehend von dem Referenzpunkt RP werden Streckenlangen zu einer beliebigen Anzahl von Konturpunkten bestimmt 105. Unter einem Konturpunkt ist ein beliebiger Punkt zu verstehen, der sich auf der ermittelten Kontur KO befindet (vgl. Figur 2).

Diejenigen Konturpunkte, deren Streckenlänge der Verbindung des jeweiligen Konturpunkts zu dem Referenzpunkt RP größer sind als eine vorgebbare erste Schranke und vorzugsweise ein lokales Maximum auf der Kontur KO bezüglich der Streckenlängen zwischen den Konturpunkten und dem Referenzpunkt RP darstellen, werden als Fingerspitzenpunkte FP klassifiziert 106. Somit wird mindestens ein Fingerspitzenpunkt FP bestimmt. Die vorgebbare erste Schranke kann beispielsweise ein vorgebbarer absoluter Wert sein oder auch ein relativer Schwellwert, d. h. eine Prozentangabe, wieviel Prozent der untersuchten Konturpunkte als Fingerspitzenpunkt FP klassifiziert werden soll. Für den letzten Fall wird dann ein Konturpunkt als Fingerspitzenpunkt FP klassifiziert, wenn die Streckenlänge der Verbindung zwischen dem Konturpunkt und dem Referenzpunkt RP größer ist als die Streckenlängen der Verbindungen zwischen der prozentual angegebenen Menge anderer Konturpunkte und dem Referenzpunkt RP.

In einer Weiterbildung des Verfahrens ist es vorgesehen, denjenigen Konturpunkt als Fingerspitzenpunkt FP zu klassifizieren, dessen Streckenlänge der Verbindung des jeweiligen Konturpunkts zu dem Referenzpunkt RP maximal ist.

Ist der mindestens eine Fingerspitzenpunkt FP bestimmt, so wird für jeden Fingerspitzenpunkt FP folgendes iteratives Verfahren durchgeführt 107.

Ausgehend von dem jeweiligen Fingerspitzenpunkt FP wird ein erster Vergleichspunkt VP1, der sich auf der Kontur KO befindet, ausgewählt 108. Auf der Kontur KO wird in etwa ein erstes Lot L1 errichtet 109, welches den ersten Vergleichspunkt VP1 enthält. Auf das erste Lot L1 wird, ausgehend von dem Fingerspitzenpunkt FP, in etwa ein zweites Lot L2 gefällt 110.

Es wird ein Quotient der Streckenlänge des zweiten Lots L2 zwischen dem Fingerspitzenpunkt FP und dem Schnittpunkt des ersten Lots L1 mit dem zweiten Lot L2 und des ersten Lots L1 mindestens zwischen dem ersten Vergleichspunkt VP1 und dem Schnittpunkt des ersten Lots L1 mit dem zweiten Lot L2 gebildet 111. Der Quotient wird als ein erstes Streckenverhältnis bezeichnet. In einem weiteren Schritt 112 wird das erste Streckenverhältnis gespeichert.

Ferner wird, ausgehend von dem jeweiligen Fingerspitzenpunkt FP, ein zweiter Vergleichspunkt VP2, der sich ebenfalls auf der Kontur KO befindet, ausgewählt 113. Auf der Kontur KO wird in etwa ein drittes Lot L3 errichtet 114, welches den zweiten Vergleichspunkt VP2 enthält. Auf das dritte Lot L3 wird, ausgehend von dem Fingerspitzenpunkt FP, in etwa ein viertes Lot L4 gefällt 115.

Es wird ein Quotient der Streckenlänge des vierten Lots L4 zwischen dem Fingerspitzenpunkt FP und dem Schnittpunkt des dritten Lots L3 mit dem vierten Lot L4 und des dritten Lots L3 mindestens zwischen dem zweiten Vergleichspunkt VP2 und dem Schnittpunkt des dritten Lots L3 mit dem vierten Lot L4 gebildet 116. Der Quotient wird als ein zweites Streckenverhältnis bezeichnet. In einem weiteren Schritt 117 wird das erste Streckenverhältnis gespeichert.

Es ist vorteilhaft, wenn jeweils der zweite Vergleichspunkt VP2 derart ausgewählt wird, daß die Streckenlänge einer Strecke zwischen dem zweiten Vergleichspunkt VP2 und dem Fingerspitzenpunkt FP größer ist als die Streckenlänge einer Strecke zwischen dem ersten Vergleichspunkt VP1 und dem Fingerspitzenpunkt FP.

In einer Weiterbildung des Verfahrens ist es vorteilhafterweise zur Vereinfachung des Verfahrens vorgesehen, jeweils das erste Lot L1 und das dritte Lot L3 über die Schnittpunkte mit dem zweiten Lot L2 bzw. dem vierten Lot L4 zu verlängern und jeweils einen weiteren Schnittpunkt mit der Kontur KO zu bilden. Diese weiteren Schnittpunkte mit der Kontur KO werden als Symmetriepunkte bezeichnet, da die Symmetriepunkte in etwa achsensymmetrisch zu dem zweiten Lot L2 bzw. dem vierten Lot L4 sind bezüglich dem ersten Vergleichspunkt VP1 bzw. dem zweiten Vergleichspunkt VP2. Das erste Streckenverhältnis bzw. das zweite Streckenverhältnis ergibt sich dann jeweils aus dem Quotienten der Streckenlänge des zweiten Lot L2 bzw. des vierten Lots L4 zwischen dem Fingerspitzenpunkt FP und dem Schnittpunkt des ersten Lots L1 bzw. des dritten Lots L3 mit dem zweiten Lot L2 bzw. dem vierten Lot L4 und des dritten Lots L3 zwischen dem ersten Vergleichspunkt VP1 bzw. dem zweiten Vergleichspunkt VP2 und den Symmetriepunkten.

Durch diese Weiterbildung wird zum einen das Verfahren vereinfacht und zum anderen werden die Ergebnisse des Verfahrens erheblich verbessert.

Sind jeweils das erste Streckenverhältnis und das zweite Streckenverhältnis ermittelt 111, 116 und gespeichert 112, 117 worden, wird untersucht, ob der Wert des zweiten Strekkenverhältnisses größer ist als der Wert des ersten Streckenverhältnisses.

Ist der Wert des zweiten Streckenverhältnisses größer als der Wert des ersten Streckenverhältnisses, so wird eine neue Iteration 107 der Verfahrensschritte 108 bis 117 durchgeführt 118, wobei es vorteilhaft ist, daß der erste Vergleichspunkt VP1 der nächsten Iteration mindestens so weit von dem Fingerspitzenpunkt FP entfernt ist wie der zweiten Vergleichspunkt VP2 der vorigen Iteration.

Ist der Wert des zweiten Streckenverhältnisses jedoch nicht größer als der Wert des ersten Strekkenverhältnisses, so wird ein Bereich als das fingerförmige Objekt FO klassifiziert, der von der Kontur KO, dem Fingerspitzenpunkt FP, dem zweiten Vergleichspunkt VP2 der letzten Iteration sowie dem Symmetriepunkt des zweiten Vergleichspunkts VP2 begrenzt wird 119.

In einer Weiterbildung des Verfahrens ist es vorteilhaft, den im vorigen beschriebenen Bereich nur dann als das fingerförmige Objekt FO zu klassifizieren, wenn das zweite Streckenverhältnis größer ist als eine vorgebbare zweite Schranke. Dadurch werden die Ergebnisse des Verfahrens weiter verbessert.

Die digitale Farbtabelle, die zur Ermittlung des ersten Objekts HO verwendet wird, kann auf für den Fachmann bekannte, unterschiedliche Weise gebildet werden. Eine Möglichkeit zur Bildung der Farbtabelle wird im weiteren beschrieben.

In einem ersten Schritt wird auf interaktive Weise zusammen mit dem Benutzer bestimmt, was als vorgegebene Farbe klassifiziert werden soll. Hierzu wird durch den Benutzer in einem von einer Kamera aufgenommenen Bild ein Bildbereich markiert, der die vorgegebene Farbe aufweist. Dies kann vorzugsweise dadurch geschehen, daß z. B. bei Klassifikation von Hautfarbe, der Benutzer selbst in dem aufgenommenen Bild aufgenommen wird, z. B. die Hand oder Kopf des Benutzers. Die Hand bzw. der Kopf des Benutzers auf dem Bild wird dann von dem Benutzer als Bildbereich markiert, der die vorgegebene Farbe aufweist. Das aufgenommene Bild wird in einer Computereinheit gespeichert und zur Weiterverarbeitung zur Verfügung gestellt.

Hier sind auch andere Vorgehensweisen möglich, z. B. kann auch die Farbe eines Kleidungsstücks als vorgegebene Farbe angegeben werden, indem der Benutzer in dem aufgenommenen Bild z. B. einen Bildbereich markiert, der das Kleidungsstück der vorgegebenen Farbe umfaßt.

Die Markierung kann auf verschiedene Weise erfolgen, sie kann z. B. vorzugsweise durch Verwendung einer Computermaus, der Tastatur, oder allen anderen dem Fachmann bekannten Möglichkeiten zur Markierung von in einer Computereinheit zu bearbeitenden Bildbereichen erfolgen.

Die Größe des markierten Bildbereichs ist von dem Benutzer frei wählbar.

Die Farbinformation aller durch die Computereinheit darstellbaren Farben aus dem verwendeten Farbraum, üblicherweise dem dreidimensionalen R-G-B (Rot-Grün-Blau) Raum wird durch eine Transformation in einen zweidimensionalen Färberaum transformiert. Durch die Transformation geht keinerlei Farbinformation verloren.

Die Transformation kann auf verschiedene Weise erfolgen.

Eine mögliche Transformation besitzt folgenden Aufbau:

$$(1) \qquad a = \frac{R}{R + G + B}$$

$$（2）\qquad b = \frac{G}{R + G + B}$$

Hierbei bezeichnen

- R den Anteil der Farbe Rot an der jeweiligen Farbe,
- G den Anteil der Farbe Grün an der jeweiligen Farbe,
- B den Anteil der Farbe Blau an der jeweiligen Farbe,
- a eine erste Raumkoordinate in dem zweidimensionalen Farbraum, und
- b eine zweite Raumkoordinate in dem zweidimensionalen Farbraum.

Weitere Transformationen sind dem Fachmann bekannt und können ohne Einschränkung in dem erfindungsgemäßen Verfahren eingesetzt werden.

Durch die Transformation wird jedem Punkt in dem dreidimensionalen Farbraum eindeutig ein Punkt in dem zweidimensionalen Farbraum zugeordnet.

Für den im vorherigen beschriebenen durch den Benutzer markierten Bildbereich wird ein erster Farbmittelwert berechnet, der einen Durchschnittswert aller in dem markierten Bildbereich vorkommenden Farben repräsentiert. Da eine Farbe in einer Computereinheit durch einen Zahlenwert repräsentiert wird, kann die Berechnung z. B. durch Bildung einer Summe über alle Farbwerte jedes in dem markierten Bildbereich sich befindenden Bildpunktes und anschließende Division durch die Anzahl der in dem markierten Bildbereich sich befindenden Bildpunkte erfolgen. Das Ergebnis ist dann der den ersten Farbmittelwert repräsentierender Zahlenwert. Der erste Farbmittelwert wird ebenso durch einen Punkt im zweidimensionalen Farbraum repräsentiert.

Nun wird auf dieselbe im vorigen beschriebenen Weise in dem markierten Bildbereich ein zweiter Farbmittelwert berechnet, wobei ein Anteil von n% der in dem markierten Bildbereich sich befindenden Bildpunkte unberücksichtigt bleibt bei der Berechnung des zweiten Farbmittelwerts. Der Anteil von n% der unberücksichtigten Bildpunkte sind die Bildpunkte, die in dem zweidimensionalen Farbraum am weitesten von dem ersten Farbmittelwert entfernt sind, also jeweils eine Farbe aufweisen, die sich von dem ersten Farbmittelwert am meisten unterscheidet.

Diese Nichtberücksichtigung von Farbwerten dient zur Fehlerkompensation. Dieses Vorgehen ist sehr vorteilhaft, um z. B. bei der Berechnung von einem die Hautfarbe repräsentierenden zweiten Farbmittelwerts anhand eines markierten Bildbereichs, der durch den Kopf des Benutzers dargestellt wird, Farbunregelmäßigkeiten, wie z. B. die Augen des Benutzers, die sich auch in dem markierten Bildbereich befinden, auszugleichen.

Die Größe von n, also die Angabe, wieviel % der sich in dem markierten Bildbereich befindenden Farbwerte unberücksichtigt bleiben sollen, ist abhängig sowohl von dem Objekt, anhand dessen der zweite Farbmittelwert gebildet werden soll als auch von der benötigten Genauigkeit des zweiten Farbmittelwerts und der zur Verfügung stehenden Rechenleistung. Aus diesem Grund muß die Größe n jeweils an die ensprechende Situation angepaßt werden. Die Größe von n kann vorzugsweise in einem Bereich von 5 - 50 liegen. Das erfindungsgemäße Verfahren ist nicht beschränkt auf den zweiten Farbmittelwert. Mit derselben Vorgehensweise können mehrere Farbmittelwerte, unter Verwendung von unterschiedlichen Werten für n, gebildet werden. Eine höhere Anzahl von Farbmittelwerten erhöht die Qualität der später folgenden Klassifikation. Ohne Einschränkung der Allgemeingültigkeit wird im folgenden nur der zweite Farbmittelwert betrachtet.

Anschließend wird eine beliebige Anzahl von Negativfarbwerten ausgewählt. Unter Negativfarbwerten sind in diesem Zusammenhang Farbwerte zu verstehen, die nicht der vorgegebenen Farbe entsprechen. Vorzugsweise wird mindestens ein die Farbe Weiß repräsentierender Weißpunkt in dem zweidimensionalen Raum als ein Negativfarbwert verwendet. Eine erhöhte Anzahl von Negativfarbwerten verbessert die im weiteren beschriebene Klassifikation aller Farben in eine Farbe, die als der vorgegebenen Farbe zugehörig, d. h. als genügend ähnlich, und in eine der vorgegebenen Farbe nicht ähnlichen Farbe.

Sowohl um den zweiten Farbmittelwert als auch um jeden den jeweiligen Negativfarbwert repräsentierenden Negativfarbpunkt, z. B. um den Weißpunkt, wird eine runde, z. B. kreisförmige oder elliptische Region gebildet. Diese Regionen werden im folgenden als eine Mittelwertregion für den zweiten Farbmittelwert und als Negativfarbregionen für die Regionen um die Negativfarbpunkte bezeichnet.

Die Regionen können beliebige Größe aufweisen, es ist also auch möglich, daß sich Regionen überlappen oder eine Region vollständig eine andere Region umschließt.

Für jeden von der Computereinheit darstellbaren, in den zweidimensionalen Farbraum transformierten Farbwert, der durch den jeweiligen Farbpunkt repräsentiert wird, wird eine Klassifikation durchgeführt, ob der jeweilige Farbpunkt als dem vorgegebenen Farbpunkt, der den zweiten Farbmittelwert repräsentiert genügend ähnlich eingeordnet wird oder ob der jeweilige Farbpunkt als dem vorgegebenen Farbpunkt nicht ähnlich klassifiziert wird.

Die Klassifikation wird in der Weise durchgeführt, daß für jeden von der Computereinheit darstellbaren Farbpunkt ein Lot gefällt wird auf jede Verbindungsgerade des den zweiten Farbmittelwert repräsentierenden vorgegebenen Farbpunkts mit jedem Negativfarbpunkt. Dadurch entstehen genau so viele Lotfußpunkte, darunter ist der Schnittpunkt des jeweiligen Lots mit der entsprechenden Verbindungsgerade zu verstehen, wie Negativfarbpunkte.

Für jeden Lotfußpunkt wird ein erster Abstand berechnet von dem Lotfußpunkt zu dem den zweiten Farbmittelwert repräsentierenden vorgegebenen Farbpunkt. Der erste Abstand wird mit einem zweiten Abstand verglichen, der den Abstand des entsprechenden Lotfußpunktes zu dem jeweiligen Negativfarbpunkt darstellt.

Ein Farbpunkt wird dann als dem zweiten Farbmittelwert repräsentierenden vorgegebenen Farbpunkt genügend ähnlich klassifiziert, wenn für jeden Lotfußpunkt des Farbpunkts der erste Abstand geringer ist als der zweite Abstand und jeder Lotfußpunkt in der Mittelwertregion liegt.

Das binäre Ergebnis wird in der Farbtabelle gespeichert, die nach Abschluß des im vorigen beschriebenen Verfahrens für jeden Farbpunkt in dem zweidimensionalen Farbraum, also für jede von der Computereinheit darstellbaren Farbe einen binären Eintrag enthält.

Die Farbtabelle enthält für jeden Farbwert, der jeweils einen Eintrag in der Farbtabelle eindeutig adressiert, die binäre Information, ob der Farbpunkt als der vorgegebenen Farbe ähnlich klassifiziert wurde oder nicht.

Der Aufbau der Farbtabelle nach dem im vorigen beschriebenen Verfahren ermöglicht eine Echtzeitrealisierung verschiedener Verwendungen des erfindungsgemäßen Verfahrens, da für einen Farbwert nur ein binärer Wert ausgelesen werden muß, damit bekannt ist, ob der Farbwert als der vorgegebenen Farbe genügend ähnlich klassifiziert wurde. Details über den Aufbau der Farbtabelle, wie er oben beschrieben wurde, sind in dem Dokument [3] zu finden.

Weitere Verfahren zum Aufbau einer Farbtabelle in einer Computereinheit sind dem Fachmann bekannt, beispielsweise aus dem Dokument [4].

In einer Weiterbildung des Verfahrens ist es vorteilhaft, den Referenzpunkt RP nicht auszuwählen, sondern den Referenzpunkt RP zu bestimmen, beispielsweise nach dem Verfahren, welches in dem Dokument [7] für markiertes Objekt angewendet wird. Dieses bekannte Verfahren wird in dem Verfahren mit der Anpassung eingesetzt, daß das markierte Objekt durch das ermittelte erste Objekt HO gegeben ist und der Referenzpunkt RP sich aus dem nach dem bekannten Verfahren ermittelten Schwerpunkt des ersten Objekts HO ergibt. Weitere Verfahren zur Bestimmung der räumlichen Lage eines Objekts sind dem Fachmann bekannt und ohne weiteres in dem Verfahren einsetzbar.

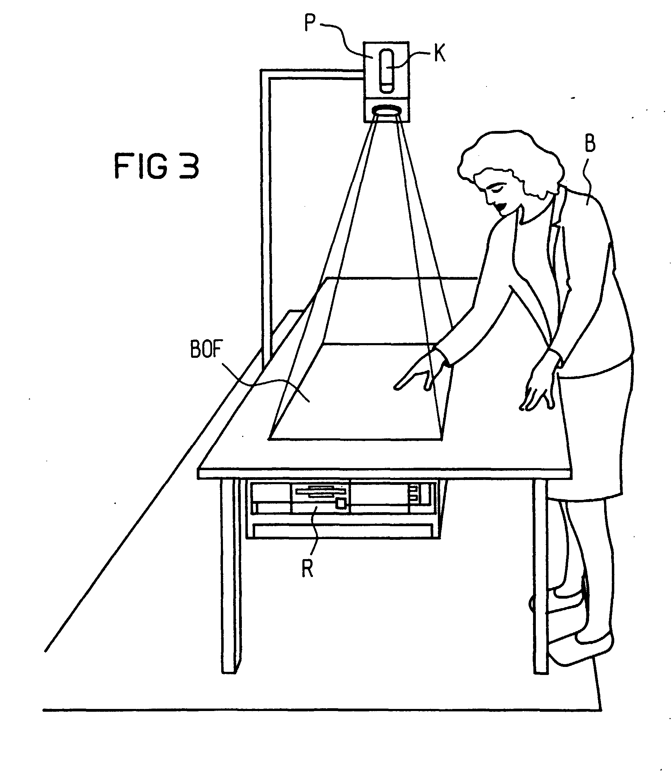

Es ist in einer Weiterbildung des Verfahrens vorteilhaft, das mindestens eine ermittelte fingerförmige Objekt FO beispielsweise in einem virtuellen Touch Screen zu verwenden, der in Figur 3 dargestellt ist.

In Figur 3 ist das virtuelle Touch Screen dargestellt, welches mindestens folgende Komponenten aufweist:

- einen Projektor P,
- die Kamera K,

- den Rechner R, und
- eine Bedienoberfläche BOF.

Von dem Projektor P wird eine virtuelle Eingabeeinheit auf die Bedienoberfläche BOF projiziert. Unter einer virtuellen Eingabeeinheit ist beispielsweise die Eingabe einer Tastatur oder Tastenanordnung eines Telefonapparats zu verstehen.

Von der Kamera K wird die Bedienoberfläche BOF aufgenommen. In dem Rechner werden zum einen das oben beschriebene Verfahren sowie die im weiteren beschriebenen Schritte durchgeführt.

Zu Beginn des Einsatzes des virtuellen Touch Screens ist es erforderlich, daß der Projektor P und die Kamera K kalibiriert werden. Darunter ist zu verstehen, daß es nach der Kalibirierung möglich ist, zweidimensionale Bildkoordinaten eines von dem Projektor P projizierten Bildes eindeutig zweidimensionalen Bildkoordinaten eines von der Kamera K aufgenommenen Bildes zuzuordnen. Hierzu kann beispielsweise das aus dem Dokument [2] bekannte Verfahren verwendet werden.

Von dem Projektor P wird die virtuelle Eingabeeinheit auf die Bedienoberfläche BOF projiziert.

Das mindestens eine fingerförmige Objekt FO wird von dem Benutzer B in einen Bereich gebracht, der von der Kamera K aufgenommen wird und der sich über der virtuellen Eingabeeinheit auf der Bedienoberfläche BOF befindet.

Das fingerförmige Objekt FO wird von der Kamera K aufgenommen, von dem Rechner R in dem aufgenommenen Bild erkannt und es wird die örtliche Position des fingerförmigen Objekts FO relativ zu der virtuellen Eingabeeinheit, d. h. den einzelnen virtuellen Elementen, also den virtuellen Tasten der virtuellen Eingabeeinheit, bestimmt.

Weiterhin wird jeweils eine Zeit ermittelt, in der das fingerförmige Objekt FO jeweils in etwa sich in Ruhe befindet, d. h. nicht bewegt wird. Ist die Zeit größer als eine vorgebbare Zeit, so wird eine Eingabe in die virtuelle Eingabeeinheit klassifiziert, d. h. beispielsweise ein Tastendruck auf die virtuelle Taste, über der sich das fingerförmige Objekt FO befindet.

In einer Weiterbildung ist es vorteilhaft, die vorgebbare Zeit variabel zu gestalten, abhängig von der Bewegung des fingerförmigens Objekt FO.

Ferner ist es in einer Weiterbildung vorgesehen, vorgebbaren Formen des ersten Objekts HO semantische Bezüge zuzuordnen, die als sogenannte Gestikerkennung in dem Rechner R berücksichtigt wird. Anhand der vorgebbaren Gesten ist es vorgesehen, den Gesten Aktionen zuzuordnen, die von dem Rechner R bei Erkennen der jeweiligen Geste durchgeführt werden.

Ferner ist es in einer Weiterbildung vorgesehen, das virtuelle Touch Screen zusätzlich durch Sprache steuerbar zu machen.

Hierfür zusätzlich ist ein Mittel zur Spracherkennung in dem Rechner R vorgesehen.

Vorteilhafte Verwendungen des virtuellen Touch Screens sind beispielsweise in Ausstellungen oder öffentlichen Terminals zu sehen, da das virtuelle Touch Screen vandalismus-sicher ausgestaltet werden kann.

Weiterhin ist eine vorteilhafte Verwendung beispielsweise in der Medizin, vor allem bei Operationen zu sehen. Der Benutzer, in diesem Fall beispielsweise der operierende Arzt kann dann eine Fläche neben dem Operationsfeld als virtuelles Touch Screen verwenden.

In diesem Dokument wurden folgende Veröffentlichungen zitiert:

[1] P. Wellner, Interactive desktop system, Europäische Patentanmeldung 0 568 161 A1

[2] P. Wellner, The Digital Desk Calculator: Tactile Manipulation on a Desk Top Display, Proceedings of UIST'91, User Interface Software and Technology, Hilton Head, New York, USA, S. 1 - 7, 11. bis 13. November 1991

[3] C. Maggioni, Verfahren zum Aufbau einer Farbtabelle in einer Computereinheit zur Klassifikation von Bildpunkten in einem Bild, Amtliches Kennzeichen P 19516664.7

[4] H. Ernst, Maschinelles Sehen, Europa Fachpresse Verlag GmbH, München, S. 121 bis 125, 1990

[5] T. Pavlidis, Algorithms for Graphics and Image Processing, Springer Verlag, ISBN 3-540-11338-X, Berlin, S. 317 - 401, 1982

[6] R. Tsai, A Versatile Camera Calibration Technique for High-Accuracy 3D Machine Vision Metrology Using Off-the-Shelf TV Cameras and Lenses, IEEE Journal of Robotics and Automation, Vol. RA-3, No. 4, S. 323 - 344, August 1987

[7] C. Maggioni und B. Wirtz, A Novel Device for Using the Hand as a Human Computer Interface, PCT/DE 94/00893

[8] K. Ishibuchi et al, Real Time Hand Shape Recognition for Man-Machine Interfaces, Emergent Innovations on Information Transfer Processing and Decision Making, Chicago, October 1992, Bd 2, S. 1407-1412

**Patentansprüche**

1. Verfahren zur Erkennung mindestens eines fingerförmigen Objekts in einem ersten, handförmigen Objekt durch einen Rechner,

- bei dem mindestens ein das erste, handförmige Objekt aufweisendes digitales Bild von einer Kamera aufgenommen wird,

- bei dem das erste, handförmige Objekt vorgebbarer Farbe ermittelt wird unter Verwendung einer digitalen Farbtabelle und eines Konturverfolgungsverfahrens,

- bei dem aus der ermittelten Kontur ein zweites, handflächenförmiges Objekt bestimmt wird,

- bei dem innerhalb des zweiten, handflächenförmigen Objekts ein Referenzpunkt gewählt wird,

- bei dem Streckenlängen einer beliebigen Anzahl von Konturpunkten jeweils zu dem Referenzpunkt bestimmt werden,

- bei dem mindestens ein Fingerspitzenpunkt sich ergibt aus den Konturpunkten, deren Streckenlängen zu dem Referenzpunkt größer sind als eine vorgebbare erste Schranke,

- bei dem für den Fingerspitzenpunkt iterativ die folgenden Schritte durchgeführt werden:

a) es wird ein erster Vergleichspunkt, der sich in der Nähe des Fingerspitzenpunktes auf der Kontur befindet, ausgewählt,
b) es wird ein erstes Lot auf dem ersten Vergleichspunkt errichtet,
c) es wird ein zweites Lot von dem Fingerspitzenpunkt auf das erste Lot gefällt,
d) es wird ein erstes Streckenverhältnis ermittelt aus der Länge der Strecke auf dem zweiten Lot von dem Fingerspitzenpunkt zu dem Schnittpunkt mit dem ersten Lot und der Länge der Strecke des ersten Lots von dem ersten Vergleichspunkt zu dem Schnittpunkt mit dem zweiten Lot,
e) das erste Streckenverhältnis wird gespeichert,
f) es wird ein zweiter Vergleichspunkt, der sich in der Nähe des ersten Vergleichspunktes auf der Kontur befindet, ausgewählt, wobei der zweite Vergleichspunkt weiter von dem Fingerspitzenpunkt entfernt liegt als der erste Vergleichpunkt,
g) es wird ein drittes Lot auf dem zweiten Vergleichspunkt errichtet,
h) es wird ein viertes Lot von dem Fingerspitzenpunkt auf das dritte Lot gefällt,
i) es wird ein zweites Streckenverhältnis ermittelt aus der Länge der Strecke auf dem vierten Lot von dem Fingerspitzenpunkt zu dem Schnittpunkt mit dem dritten Lot und der Länge der Strecke des dritten Lots von dem zweiten Vergleichspunkt zu dem Schnittpunkt mit dem vierten Lot,
j) das zweite Streckenverhältnis wird gespeichert,

- bei dem für den Fall, daß das erste Streckenverhältnis kleiner ist als das zweite Streckenverhältnis, die Schritte a) bis j) in einer weiteren Iteration durchgeführt werden, wobei der erste Vergleichspunkt der weiteren Iteration mindestens so weit von dem Fingerspitzenpunkt entfernt ist wie der zweite Vergleichspunkt der vorigen Iteration, und
- bei dem sonst ein Bereich, der von dem zweiten Vergleichspunkt, der Kontur, dem Fingerspitzenpunkt sowie einem bezüglich des vierten Lots zu dem zweiten Vergleichspunkt in etwa achsensymmetrischen Symmetriepunkt begrenzt wird als das fingerförmige Objekt klassifiziert wird.

2. Verfahren nach Anspruch 1,

- bei dem der Fingerspitzenpunkt sich ergibt aus dem Konturpunkt, dessen Streckenlänge zu dem Referenzpunkt maximal ist.

3. Verfahren nach Anspruch 1 oder 2,

bei dem für den ersten Vergleichspunkt und für den zweiten Vergleichspunkt jeweils ein Symmetriepunkt ermittelt wird, der jeweils in etwa achsensymmetrisch zu dem ersten Vergleichspunkt oder dem zweiten Vergleichspunkt ist bezüglich dem zweiten Lot bzw. dem vierten Lot, wobei der erste Vergleichspunkt bzw. der zweite Vergleichspunkt auf der Kontur liegt.

4. Verfahren nach Anspruch 3,

bei dem sich das erste Streckenverhältnis und das zweite Streckenverhältnis sich ergeben aus der Länge der Strecke auf dem zweiten Lot bzw. auf dem vierten Lot von dem Fingerspitzenpunkt zu dem Schnittpunkt mit dem ersten Lot bzw. dem dritten Lot und der Länge der Strecke auf dem ersten Lot bzw. auf dem dritten Lot von dem ersten Vergleichspunkt bzw. von dem zweiten Vergleichspunkt zu dem jeweiligen Symmetriepunkt

5. Verfahren nach einem der Ansprüche 1 bis 4,

bei dem der Bereich nur für den Fall als das fingerförmige Objekt klassifiziert wird, wenn das zweite Streckenverhältnis größer ist als eine vorgebbare zweite Schranke.

6. Verfahren zur Bedienung eines virtuellen Touch Screens unter Verwendung des nach einem der Ansprüche 1 bis 5 klassifizierten fingerförmigen Objekts.

7. Verfahren nach Anspruch 6,

- bei dem das virtuelle Touch Screen von einem Projektor auf eine Bedienoberfläche projiziert wird,
- bei dem die örtliche Position des fingerförmigen Objekts in Bezug auf das virtuelle Touch Screen bestimmt wird,
- bei dem eine Eingabe des fingerförmigen Objekts mit einem Element des virtuellen Touch Screens klassifiziert wird, wenn das fingerförmige Objekt eine vorgebbare Zeit über dem Element des virtuellen Touch Screens ruht.

8. Verfahren nach Anspruch 7,

bei dem die vorgebbare Zeit variabel ist, abhängig von der Bewegung des fingerförmigen Objekts vor dem Ruhen.

9. Verfahren nach einem der Ansprüche 6 bis 8,

- bei dem vorgebbaren Formen des handförmigen ersten Objektes semantische Bezüge zugeordnet werden,
- bei dem anhand der semantischen Bezüge in dem Rechner vorgebbare Aktionen durchgeführt werden.

10. Verfahren nach einem der Ansprüche 1 bis 9,

bei dem zusätzlich zur Bedienung des virtuellen Touch Screens Verfahren zur Spracherkennung von Worten, die von dem Benutzer des virtuellen Touch Screens gesprochen werden, verwendet werden.

11. Verfahren nach einem der Ansprüche 1 bis 10,

bei dem sich der Symmetriepunkt ergibt aus einem Schnittpunkt des dritten Lots und der Kontur.

**Claims**

1. Method for computer recognition of at least one finger-shaped object in a hand-shaped first object,

- in which at least one digital image having the first, hand-shaped object is taken by a camera,
- in which the first, hand-shaped object of prescribable colour is determined by using a digital colour table and a contour-following method,
- in which a second, palm-shaped object is determined from the contour determined,
- in which a reference point is selected inside the second, palm-shaped object,

in which path lengths of an arbitrary number of contour points are determined relative to the reference point in each case,

in which at least one fingertip point is produced from the contour points whose path lengths relative to the reference point are greater than a prescribable first bound,

in which the following steps are carried out iteratively for the fingertip point:

a) a first point of comparison is selected which is located, in the vicinity of the fingertip point, on the contour,

b) a first perpendicular is erected on the first point of comparison,

c) a second perpendicular is dropped from the fingertip point onto the first perpendicular,

d) a first path ratio is determined from the length of the path on the second perpendicular from the fingertip point to the point of intersection with the first perpendicular and the length of the path of the first perpendicular from the first point of comparison to the point of intersection with the second perpendicular,

e) the first path ratio is stored,

f) a second point of comparison, which is located, in the vicinity of the first point of comparison, on the contour, is selected, the second point of comparison being situated more remote from the fingertip point than the first point of comparison,

g) a third perpendicular is erected on the second point of comparison,

h) a fourth perpendicular is dropped from the fingertip point onto the third perpendicular,

i) a second path ratio is determined from the length of the path on the fourth perpendicular from the fingertip point to the point of intersection with the third perpendicular and the length of the path of the third perpendicular from the second point of comparison to the point of intersection with the fourth perpendicular,

j) the second path ratio is stored,

in which steps a) to j) are carried out in a further iteration for the case in which the first path ratio is smaller than the second path ratio, the first point of comparison of the further iteration being at least as remote from the fingertip point as the second point of comparison of the previous iteration, and

in which otherwise a region which is bounded by the second point of comparison, the contour, the fingertip point and a point of symmetry which is approximately axially symmetrical with respect to the fourth perpendicular to the second point of comparison is classified as the finger-shaped object.

2. Method according to Claim 1,

in which the fingertip point is produced from the contour point whose path length is maximum relative to the reference point.

3. Method according to Claim 1 or 2, in which there is determined in each case for the first point of comparison and for the second point of comparison a point of symmetry which is in each case approximately axially symmetric relative to the first point of comparison or the second point of comparison with respect to the second perpendicular or the fourth perpendicular, respectively, the first point of comparison or the second point of comparison, respectively, being situated on the contour.

4. Method according to Claim 3, in which the first path ratio and the second path ratio are produced from the length of the path on the second perpendicular or on the fourth perpendicular, respectively, from the fingertip point to the point of intersection with the first perpendicular or the third perpendicular, respectively, and the length of the path on the first perpendicular or on the third perpendicular, respectively, from the first point of comparison or from the second point of comparison, respectively, to the respective point of symmetry.

5. Method according to one of Claims 1 to 4, in which the region is classified as the finger-shaped object only for the case in which the second path ratio is greater than a prescribable second bound.

6. Method for operating a virtual touch screen by using the finger-shaped object classified according to one of Claims 1 to 5.

7. Method according to Claim 6,

in which the virtual touch screen is projected by a projector onto an operating surface,

in which the spatial position of the finger-shaped object is determined with respect to the virtual touch screen, and

in which an input of the finger-shaped object with an element of the virtual touch screen is classified when the finger-shaped object rests for a prescribable time over the element of the virtual touch screen.

8. Method according to Claim 7, in which the prescribable time can be varied as a function of the movement of the finger-shaped object before the resting.

9. Method according to one of Claims 6 to 8,

   - in which semantic references are assigned to prescribable shapes of the hand-shaped first object, and
   - in which prescribable actions are carried out in the computer with the aid of the semantic references.

10. Method according to one of Claims 1 to 9, in which in addition to the operation of the virtual touch screen use is made of methods for voice recognition of words which are spoken by the user of the virtual touch screen.

11. Method according to one of Claims 1 to 10, in which the point of symmetry is produced from a point of intersection of the third perpendicular and the contour.

## Revendications

1. Procédé de reconnaissance par ordinateur d'au moins un objet en forme de doigt dans un premier objet en forme de main,

   - dans lequel au moins une image numérique présentant le premier objet en forme de main est enregistrée par une caméra,
   - dans lequel le premier objet en forme de main de couleur prédéfinissable est détecté grâce à l'utilisation d'une table de couleurs numérique et d'un procédé de balayage de contour,
   - dans lequel un deuxième objet en forme de paume est déterminé à partir du contour détecté,
   - dans lequel un point de référence est choisi à l'intérieur du deuxième objet en forme de paume,
   - dans lequel des longueurs d'intervalle d'un nombre quelconque de points de contour sont déterminées à chaque fois par rapport audit point de référence,
   - dans lequel au moins un point de bout du doigt est obtenu à partir desdits points de contour dont les longueurs d'intervalle par rapport audit point de référence sont plus grandes qu'une première limite prédéfinissable,
   - dans lequel les étapes suivantes sont effectuées itérativement pour ledit point de bout du doigt :

      a) un premier point de comparaison est choisi, qui se trouve à proximité du point de bout du doigt sur le contour,

      b) une première perpendiculaire est dressée sur le premier point de comparaison,

      c) une deuxième perpendiculaire est abaissée sur la première perpendiculaire, depuis le point de bout du doigt,

      d) un premier rapport d'intervalle est déterminé à partir de la longueur de l'intervalle sur la deuxième perpendiculaire, entre le point de bout du doigt et le point d'intersection avec la première perpendiculaire, et la longueur de l'intervalle de la première perpendiculaire, entre le premier point de comparaison et le point d'intersection avec la deuxième perpendiculaire,

      e) le premier rapport d'intervalle est stocké en mémoire,

      f) un deuxième point de comparaison est choisi, qui se trouve à proximité du premier point de comparaison sur le contour, le deuxième point de comparaison étant plus éloigné du point de bout du doigt que le premier point de comparaison,

      g) une troisième perpendiculaire est dressée sur le deuxième point de comparaison,

      h) une quatrième perpendiculaire est abaissée sur la troisième perpendiculaire, depuis le point de bout du doigt,

      i) un deuxième rapport d'intervalle est calculé à partir de la longueur de l'intervalle sur la quatrième perpendiculaire, entre le point de bout du doigt et le point d'intersection avec la troisième perpendiculaire, et la longueur de l'intervalle de la troisième perpendiculaire, entre le deuxième point de comparaison et le point d'intersection avec la quatrième perpendiculaire,

      j) le deuxième rapport d'intervalle est stocké en mémoire,

   - dans lequel les étapes a) à j) sont effectuées par une autre itération si le premier rapport d'intervalle est plus petit que le deuxième rapport d'intervalle, le premier point de comparaison de l'autre itération étant éloigné du point de bout du doigt au moins autant que le deuxième point de comparaison de l'itération précédente, et
   - dans lequel, sinon, une autre zone, qui est limitée par le deuxième point de comparaison, le contour, le point de bout du doigt ainsi qu'un point de symétrie sensiblement symétrique à l'axe du deuxième point de comparaison par rapport à la quatrième perpendiculaire, est classifiée comme l'objet en forme de doigt.

2. Procédé selon la revendication 1, dans lequel le point de bout du doigt est obtenu à partir du point de contour dont la longueur d'intervalle par rapport au point de référence est maximale.

**3.** Procédé selon la revendication 1 ou 2, dans lequel un point de symétrie est calculé à chaque fois pour le premier point de comparaison et pour le deuxième point de comparaison, lequel point de symétrie est à chaque fois sensiblement symétrique à l'axe du premier point de comparaison ou du deuxième point de comparaison par rapport à la deuxième resp. quatrième perpendiculaire, le premier point de comparaison resp. le deuxième point de comparaison étant placé sur le contour.

**4.** Procédé selon la revendication 3, dans lequel le premier rapport d'intervalle et le deuxième rapport d'intervalle sont obtenus à partir de la longueur de l'intervalle sur la deuxième perpendiculaire resp. sur la quatrième perpendiculaire, entre le point de bout du doigt et le point d'intersection avec la première perpendiculaire resp. la troisième perpendiculaire, et la longueur de l'intervalle sur la première perpendiculaire resp. sur la troisième perpendiculaire, entre le premier point de comparaison resp. le deuxième point de comparaison et le point de symétrie respectif.

**5.** Procédé selon l'une des revendications 1 à 4, dans lequel la zone n'est classifiée en tant qu'objet en forme de doigt que si le deuxième rapport d'intervalle est plus grand qu'une deuxième limite prédéfinissable.

**6.** Procédé pour opérer un écran tactile virtuel grâce à l'utilisation de l'objet en forme de doigt classifié selon l'une des revendications 1 à 5.

**7.** Procédé selon la revendication 6,

- dans lequel l'écran tactile virtuel est projeté par un projecteur sur une surface utilisateur,
- dans lequel l'emplacement de l'objet en forme de doigt par rapport à l'écran tactile virtuel est déterminé,
- dans lequel une entrée de l'objet en forme de doigt est classifiée avec un élément de l'écran tactile virtuel si l'objet en forme de doigt repose sur l'élément de l'écran tactile virtuel pendant un temps prédéfinissable.

**8.** Procédé selon la revendication 7, dans lequel le temps prédéfinissable est variable, en fonction du mouvement de l'objet en forme de doigt avant le repos.

**9.** Procédé selon l'une des revendications 6 à 8,

- dans lequel des relations sémantiques sont attribuées à des formes prédéfinissables du premier objet en forme de main,
- dans lequel des actions prédéfinissables sont effectuées dans l'ordinateur, à l'aide des relations sémantiques.

**10.** Procédé selon l'une des revendications 1 à 9, dans lequel, en plus de l'utilisation de l'écran tactile virtuel, des procédés de reconnaissance vocale de mots, lesquels sont prononcés par l'utilisateur de l'écran tactile virtuel, sont mis en oeuvre.

**11.** Procédé selon l'une des revendications 1 à 10, dans lequel le point de symétrie est obtenu à partir d'un point d'intersection de la troisième perpendiculaire et du contour.

FIG 1

FIG 2

FIG 3